# EUROPÄISCHE PATENTSCHRIFT

(11) **EP 0 605 864 B1**
(45) Veröffentlichungstag und Bekanntmachung des Hinweises auf die Patenterteilung: **11.11.1998**
(21) Anmeldenummer: 93120914.2
(22) Anmeldetag: 27.12.1993
(51) Int. Cl.: C08L 77/00, C08K 3/26

(54) **Schwerentflammbare Polyamidformmassen**
Flame retardant polyamide moulding compositions
Masses à mouler à base de polyamides difficilement inflammables

(30) Priorität: 07.01.1993 DE 4300260
(43) Veröffentlichungstag der Anmeldung: 13.07.1994
(73) Patentinhaber: BAYER AG, 51368 Leverkusen (DE)
(72) Erfinder: El Sayed, Aziz, Dr., D-51375 Leverkusen (DE); Ostlinning, Edgar, Dr., D-40237 Düsseldorf (DE); Idel, Karsten-Josef, Dr., D-47802 Krefeld (DE); Freitag, Dieter, Dr., D-47802 Krefeld (DE); Heger, Georg, Dr., D-47800 Krefeld (DE)

(56) Entgegenhaltungen:
- EP-A- 0 278 559
- EP-A- 0 346 825
- EP-A- 0 543 262

## Beschreibung

Die Erfindung betrifft eine leichtverarbeitbare, Polyamidformmasse mit sehr guten mechanischen und elektrischen Eigenschaften auf Basis von Kalzium-Magnesium-Carbonathydrat als Flammschutzadditiv.

Polyamide sind hochwertige Thermoplaste und zeichnen sich besonders aus durch leichte Verarbeitbarkeit, sehr gute mechanische und elektrische Eigenschaften, eine hohe Wärmeformbeständigkeit und gute Chemikalienbeständigkeit

Die Eigenschaften der bewährten Polyamide lassen sich durch Verstärkung mit Glasfasem, Glaskugeln, mineralischen Füllstoffen oder Mischungen aus diesen merklich erweitern. Elastomermodifizierung verbessert die Schlagzähigkeit der verstärkten Polyamide. Durch die Vielzahl der Kombinationsmöglichkeiten werden immer neue maßgeschneiderte Produkte für spezielle Einsatzgebiete entwickelt. Durch den Zusatz von mineralischen Füllstoffen oder Glasfasem zum Polyamid wird jedoch die Oberflächengüte merklich beeinträchtigt.

Im Elektrobereich haben sich die Polyamide seit langem bewährt. Für dieses Einsatzgebiet werden hauptsächlich brandgeschützte Polyamide verwendet.

Als Brandschutzmittel sind roter Phosphor, organische Halogenverbindungen, bestimmte Stickstoffverbindungen und Magnesiumhydroxid bekannt und werden seit langem in Polyamiden eingesetzt.

So wird z.B. roter Phosphor nach DE 3 713 746 A 1 (≙ US 4877823) und EP-A 299 444 (≙ US 5 081 222) hauptsächlich in glasfaserverstärktem PA 66 und 6/6T eingesetzt. Wegen der roten Eigenfarbe des Phosphors und seines pigmentartigen Charakters können solche Compounds nur in dunklen Farben geliefert werden.

Außerdem neigen sie bei der Einwirkung von Feuchtigkeit und Wärme zur Bildung von Phosphin und Phosphaten (durch Disproportionierung des Phosphors). Phosphin ist toxikologisch problematisch und korrodiert die kupferhaltigen Kontakte in elektrischen Installationen und Anlagen (z.B. auf Leiterplatinen, Schaltern etc.). Phosphate bilden unter Umständen leitfähige Beläge zwischen den Kontakten. Durch geeignete Stabilisatoren wird die Disproportionierungsreaktion des Phosphors verzögert, aber nicht unterbunden.

Bromierte Diphenyle oder Diphenylether sind Beispiele für organische Halogenverbindungen, die in Kombination mit Antimontrioxid lange Zeit eingesetzt wurden. Nach bekanntwerden der Dioxin- Problematik wurden folgende Halogenverbindungen verwendet:
- Chlorierte cycloaliphatische Kohlenwasserstoffe (z.B.Dechlorane® Plus von Occidental Chemical Co)
- Bromierte Styrol-Oligomere (siehe z.B. in DE-A 2 703 419)
- Kernbromierte Polystyrole (z.B.PYRO-CHEK® 68 von FERRO Chemicals)

Als Synergist zu den genannten Halogenverbindungen werden heute Zinksalze oder Eisenoxide eingesetzt. Die meisten Flammschutzmittel auf Halogenbasis beginnen sich bei den üblichen Verarbeitungstemperaturen von Polyamiden thermisch zu zersetzen. Dabei bilden sich korrodierend wirkende Gase. Als Folge werden die elektrischen Kontakte in Schaltem bzw. elektrische Installationen zerstört. Außerdem werden die elektrischen Eigenschaften der Polyamide durch die bei der Zersetzung gebildeten ionogenen Spaltprodukte beeinträchtigt.

Für die Herstellung von Formteilen in hellen Farben werden diese Nachteile im Kauf genommen.

Unter den Stickstoffverbindungen haben sich vor allem Melaminsalze als Flammschutzmittel nur für unverstärkte Polyamide bewährt. Solche Produkte haben eine helle Eigenfarbe und besitzen gute elektrische Eigenschaften. Nachteilig ist die relativ niedrige Zersetzungstemperatur von Melaminsalzen.

Magnesiumhydroxid hat sich als Flammschutzmittel für Polyolefine und Elastomere bewährt. Es hat gegenüber dem früher verwendeten Aluminiumhydroxid den Vorteil der höheren Wasserabspaltungstemperatur (340°C). Der Einsatz von Magnesiumhydroxid in Polyamiden ist in der Literatur beschrieben. Eine Konzentration von über 55 Gew.-% Magnesiumhydroxid ist allerdings in den Formmassen immer erforderlich, um bei 1,6 mm dicken Brandschutzprüfkörpern die Bewertung V 0 nach UL 94 (US Brandprüfung nach Underwriters Laboratories) zu erreichen. Die Verarbeitung solcher Produkte ist problematisch. Die mechanischen Eigenschaften aus den genannten Massen hergestellter Formkörper sinken auf ein tieferes Niveau. Außerdem wird die Oberflächenqualität merklich verschlechtert. In EP 0 335 165A1 wird vorgeschlagen zu Polyamid 0,1 bis 20 Gew. % eines funktionalisierten Olefinhomo-oder Copolymeren und 3 bis 30 Gew. % einer Verstärkungsfaser zuzugegeben, um mit 40-70 Gew.-% speziellen Magnesiurnhydroxidsorten, die eine spez. Oberfläche mit weniger als 18 m²/g aufweisen, flammmhemmende Compounds herzustellen. Mit normalem Magnesiumhydroxid und ohne olefinische Additive wird indes die Bewertung V 0 bei 1,6 mm Dicke nach UL 94 nicht erzielt. Durch die Koppelung der speziellen Polyolefine an Polyamid und die hohen Füllgerade lassen sich solche Compounds nicht leicht verarbeiten.

Magnesium-Kalzium-Carbonathydrat hat höhere Glühverluste (54 %) als Magnesiumhydroxid (33 %) und spaltet Wasser und Kohlendioxid bei niedrigeren Temperaturen ab als Magnesiurnhydroxid. Deshalb wird das Produkt nur für Polypropylen/Polybutylterephthalat PP und PBT empfohlen und eingesetzt. Bei Polyamiden liegt die Verarbeitungstemperatur oberhalb der Zersetzungstemperatur der Magnesium-Kalzium-Carbonat hydrat (≈ 285°C).

Aufgabe die Erfindung war es, eine Polyamid-Formmasse bereitzustellen, in die Magnesium-Kalzium-Carbonathydrat ohne Zersetzung in Folge von Scherung und ohne Schwierigkeiten eingearbeitet werden kann. Dabei sollten phosphor- und halogenfreie aber leicht verarbeitbare Polyamidformmassen ohne die genannten Nachteile des Stands der Technik, mit der Klassifizierung V 0 bei 1,2 mm nach UL 94 hergestellt werden.

Es wurde gefunden, daß durch die Kombination von
- 5-50 Gew. % eines thermoplastischem, teilkristallinen Polyamid
- 2-30 Gew. % eines thermoplastischen die Verarbeitungstemperatur des senkenden Additivs
- 0-35 Gew. % Verstärkungsstoffe
- 40-60 Gew.% Magnesium-Kalzium-Carbonathydrat
- 0-2,0 Gew.% Additiven, wie Gleitmittel, Stabilisatoren, und Nukleierungs mitteln
die genannten Eigenschaften erreicht werden.

Gegenstand der Erfindung sind schwerentflammbare Polyamidformmassen aus
A) von 5 bis 50 Gew.-%,bevorzugt von 10 bis 43 Gew.-%, eines thermoplastischen Polyamids,
B) von 2 bis 30 Gew.-% eines die Verarbeitungstemperaturen des Polyamids senken den thermoplastischen Additives,
C) von 40 bis 60 Gew.-%, bevorzugt 45 bis 60 Gew.-% Magnesium-Kalzium-Carbonathydrat,
D) von 0 bis 35 Gew.%, bevorzugt von 0 bis 25 Gew.-% Verstärkungsstoffe,
E) von 0 bis 2.0 Gew. % Verarbeitungsadditive,
die Verwendung der Polyamidformmassen zur Herstellung von Formkörper aus den erfindungsgemäßen Formmassen sowie Formkörper aus den erfindungsgemäßen Formmassen.

Die Herstellung der erfindungsgemäßen Massen erfolgt in einem Extrusionsgang oder in zwei Extrusionsgängen auf einem handelsüblichen Einwellen- oder Zweiwellen-Extruder bzw. Kneter. Die Dosierung des Magnesium-Kalzium-Carbonathydrates erfolgt im Granulattrichter und/oder durch eine Seitenschnecke in die Polyamidschmelze. Die Zugabe der Verstärkungsstoffe D) (z.B. Glasfasern) erfolgt nach dem Stand der Technik in der Glasfaseröffnung kurz vor der Düse. Die Masse-Temperatur richtet sich nach den verwendeten Polyamiden und liegt ca. 20 °C unter den üblichen Verarbeitungstemperaturen ( 290 und 310°C).

Als thermoplastisches Polyarnid der erfindungsgemäßen Formmassen eignen sich teilkristalline Polyamide, insbesondere sind PA 6, PA 66, PA 46, PA 610, PA 6/6T und teilkristalline Copolyamide auf Basis dieser Komponenten bevorzugt.

Als die Verarbeitungstemperatur des Polyamids senkenden Additive B) der erfindungsgemässen Formmassen eignen sich bevorzugt 8 bis 25 Gew.-% Copolyamide aus Isophthalsäure oder/und Terephthalsäure-Hexamethylendiamin/Caprolactam und/oder 1 bis 9 Gew.-%, bevorzugt 2 bis 6 Gew.-%, Polyhydroxyverbindungen vom Novolak-Typ mit einem Polymerisationsgrad von 3 bis 20, wie in EP-A-423 564 beschrieben.

Als Verstärkungsstoffe D) für die erfindungsgemäßen Formmassen werden z.B. handelsübliche Glasfasern und/oder Kohlefasern und/oder Mineralfasern mit Oberflächenbehandlung für Polyamide, bevorzugt Glasfasern, verwendet.

Als Magnesium-Kalzium-Carbonathydrat gemäß dieser Erfindung wird handelsübliches naturliches Mineral mit oder ohne Oberflächenbehandlung verwendet. Durch die Behandlung der Oberfläche des Magnesium-Kalzium-Carbonathydrat mit Haftvermittlern (z.B. Aminosilane, Epoxysilane, Salze von Fettsäuren) wird die Bindung des Minerals an Polyamid deutlich verbessert. Geignete handelsübliche Produkte sind z.B. Martinett® der Fa. Martinswerk, Securoc® der Fa. Incemin und Ultracarb® der Fa. Microfine und können gemäß dieser Erfindung verwendet werden. Bevorzugt ist feinteiliges Magnesium-Kalzium-Carbonathydrat mit einem mittlerem Durchmesser von 0,4-10 µm (Zahlenmittel).

Die Verarbeitungsadditive E) sind handelsübliche Gleitmitteln, Thermostabilisatoren und/oder Nukleierungsmitteln.

Folgende Produkte wurden in den nachstehenden Beispielen verwendet:
Polyamid 6 PA6 = Durethan® B 31 F der Bayer AG (relative Viskosität ηrel.: 3 gemessen in 1 %iger Metakresollösung bei 25°C)
Teil aromat. Copolyamid = Durethan® VP KU 2-2160 Copolyamid aus 85 Gew.-Teilen PA 6 und 15 Gew.-Teilen PA aus Isophthalsäure und Hexamethylendiamin
Vulkadur® RB= Novolak der Bayer AG Phenol Formaldehydharz: Schmelzpunkt 85°C, 1,2g/cm³
Magnesium-Kalzium-Carbonathydrat= Securoc C 10 Fa. Incemin; Glühverlust bei 1 100°C 54 %, Dichte 2,6 g/cm³, Korngrößenverteilung nach SEDIGRAPH 5 000 d: d50; 0,5 bis 0,6 µm
Glasfaser = Bayerglas CS 7919; Durchmesser 11 µm; Länge 4,5 mm
Amidwachs=Abrilwax; Stearoyl/palmitoylethylendiamin

### Beispiele 1-4

Die Einsatzstoffe gemäß Tabelle 1 wurden vorgemischt und über Zweiwellenschneckenkneter extrudiert und anschließend granuliert Das erhaltene Granulat wurde bei 70°C im Vakuumtrockenschrank 4 h getrocknet und anschließend auf einer Arburg Spritzgußmaschine bei 270-280°C zu Prüfkörpern gespritzt. Die mechanischen und elektrischen Eigenschaften sowie das Brandverhalten der erhaltenen Prüfkörper wurden nach UL 94 (underwriter Laboratories USA) bestimmt. Die Ergebnisse sind in Tabelle 1 wiedergegeben. Es zeigt sich, daß die erfindungsgemäßen Mischungen (Beispiel 2-4) neben leich verbesserten mechanischen Kennwerten eine deutlich höhere Oberflächengüte und ein bessere Flammhemmwirkung zeigen als die bekannten Mischungen.

**Tabelle 1**

| Versuch | | 1 | 2 | 3 | 4 | |
|---|---|---|---|---|---|---|
| Vergl.-Versuch | | | | | | |
| | | **Zusammensetzung** | | | | |
| Polyamid 6 | Gew.-% | 40,2 | 17,0 | 16,9 | 36,2 | |
| Teil aromat. Copolyamid | Gew.-% | 0,0 | 23,2 | 22,9 | 0,0 | |
| Vulkadur RB | Gew.-% | 0,0 | 0,0 | 0,0 | 4,0 | |
| Mg-Ca-Carbonat-hydrat | Gew.-% | 51,7 | 51,7 | 45,1 | 51,7 | |
| Glasfasern | Gew.-% | 8,0 | 8,0 | 15,0 | 8,0 | |
| Amidwachs | Gew.-% | 0,1 | 0,1 | 0,1 | 0,1 | |

| | | Verarbeitungsbedingungen und technische Daten | | | | |
|---|---|---|---|---|---|---|
| Extrusionstemp. | °C | 290 | 260 | 270 | 260 | |
| Izod-Schlag-zähigkeit | kJ/m² | 25 | 29 | 33 | 28 | ISO180 1C |
| Oberflächengüte | | -- | +++ | +++ | ++ | |
| Biegefestigkeit | MPa | 190 | 198 | 211 | 201 | DIN 53452 |
| Randfaserd. | % | 2,0 | 2,1 | 2,0 | 2,0 | DIN 53452 |
| Biege-E-Modul | MPa | 12000 | 11000 | 13000 | 12000 | DIN 53457-B3 |

| Temperatur der Glühdrahtprüfung | | | | | | |
|---|---|---|---|---|---|---|
| 1mm | °C | 960 | 960 | 960 | 960 | IEC 695-2-1 |
| Brandschutzklasse bei | 3,2 mm | V0 | V0 | V0 | V0 | UL 94 |
| | 1,6 mm | V 2 | V0 | V0 | V0 | UL 94 |
| | 0,8 mm | V 2 | V0 | V0 | V0 | UL 94 |
| Bewertung der Oberflächengüte: -- ungenügend ( fleckig, rauh, etc) - mangelhaft + ausreichend ++ gut +++ hervorragend ( glatt, glänzend, fleckenlos) | | | | | | |

## Patentansprüche

1. Schwerentflammbare, Polyamidformmassen bestehend aus:
A) von 5 bis 50 Gew. % thermoplastischem, teilkristallinen Polyamid,
B) von 2 bis 30 Gew. % eines thermoplastischen, die Verarbeitungstemperatur des Polyamids senkenden Additives,
C) von 40 bis 60 Gew.% Magnesium-Kalzium-Carbonathydrat,
D) von 0 bis 35 Gew. % Verstärkungsstoffe,
E) von 0 bis 2,0 Gew.% Additiven, wie Gleitmittel, Stabilisatoren, und Nukleierungsmitteln.

2. Formmassen nach Anspruch 1, dadurch gekennzeichnet, daß sie
A) von 10 bis 43 Gew.-% Polyamid,
B) von 8 bis 25 Gew.-% Additive,
C) von 45 bis 60 Gew.-% Mg-Ca-carbonathydrat und
D) von 0 bis 25 Gew.-% Verstärkungsstoffe
enthalten.

3. Formmassen nach Anspruch 1, dadurch gekennzeichnet, daß als thermoplastisches Polyamid A) aus PA6, PA 66, PA 46, PA 610, PA 6/6T oder teilkristalline Copolyamide aus diesen Komponenten allein oder in Mischung eingesetzt werden.

4. Formmassen nach Anspruch 1, dadurch gekennzeichnet, daß als die Verarbeitungstemperatur des Polyamids senkendes Additiv B)
a) von 8 bis 25 Gew.-% eines Copolyamids aus Isophthalsäure- oder/und Terephthalsäure-Hexamethylendiamin/Caprolactam und/oder
b) von 1 bis 9 Gew.-% Polyhydroxyverbindungen vom Novolak-Typ mit einem Polymerisationsgrad von 3 bis 20 eingesetzt werden, wobei die Summe von a) + b) 30 Gew.-% nicht übersteigt.

5. Formmassen nach den Ansprüchen 1 bis 4, dadurch gekennzeichnet, daß das als Verstärkungsstoffe D) Glasfasern, Kohlefasern, Mineralfasern oder Mischungen daraus verwendet werden.

6. Formmassen nach Anspruch 1 bis 5, dadurch gekennzeichnet, daß als flammhemmendes Additiv Magnesium-Kalzium-Carbonathydrat mit einer die Haftung verbessernden Oberflächenbehandlung verwendet wird, welches einen mittleren Teilchendurchmesser von 0,4 bis 10 µm aufweist

7. Verwendung der Formmassen gemäß den Anspruchen 1 bis 6 zur Herstellung geformter Teile.

8. Formteile, hergestellt aus den Formmassen nach den Anspruchen 1 bis 6.

## Claims

1. Low-flammability polyamide moulding compositions consisting of:
A) from 5 to 50 wt.% of a thermoplastic, partially crystalline polyamide,
B) from 2 to 30 wt.% of a thermoplastic additive which lowers the processing temperature of the polyamide,
C) from 40 to 60 wt.-% of magnesium calcium carbonate hydrate,
D) from 0 to 35 wt.% of reinforcing materials,
E) from 0 to 2.0 wt.% of additives, such as lubricants, stabilisers and nucleating agents.

2. Moulding compositions according to claim 1,
characterised in that they contain
A) from 10 to 43 wt.% of polyamide,
B) from 8 to 25 wt.% of additives,
C) from 45 to 60 wt.% of Mg Ca carbonate hydrate and
D) from 0 to 25 wt.% of reinforcing materials.

3. Moulding compositions according to claim 1,
characterised in that PA 6, PA 66, PA 46, PA 610, PA 6/6T or partially crystalline copolyamides made from these components are used on their own or in a mixture as the thermoplastic polyamide A).

4. Moulding compositions according to claim 1,
characterised in that
a) from 8 to 25 wt.% of a copolyamide made from isophthalic acid- or/and terephthalic acidhexamethylenediamine/caprolactam and/or
b) from 1 to 9 wt.% polyhydroxyl compounds of the Novolak type having a degree of polymerisation of from 3 to 20
are used as the additive B) which lowers the processing temperature of the polyamide, the sum of a) + b) not exceeding 30 wt.%.

5. Moulding compositions according to claims 1 to 4, characterised in that glass fibres, carbon fibres, mineral fibres or mixtures thereof are used as the reinforcing materials D).

6. Moulding compositions according to claims 1 to 5, characterised in that magnesium calcium carbonate hydrate with a surface treatment which improves the adhesion, and which has an average particle diameter of 0.4 to 10 µm, is used as the flame-retardant additive.

7. Use of the moulding compositions according to claims 1 to 6 for the production of moulded parts.

8. Mouldings produced from the moulding compositions according to claims 1 to 6.

## Revendications

1. Matières à mouler peu inflammables à base de polyamides, consistant en :
A) 5 à 50 % en poids d'un polyamide thermoplastique partiellement cristallin,
B) 2 à 30 % en poids d'un additif thermoplastique abaissant la température de façonnage du polyamide,
C) 40 à 60 % en poids de carbonate hydraté de calcium-magnésium,
D) 0 à 35 % en poids de matières renforçantes,
E) 0 à 2,0 % en poids d'additifs tels que des lubrifiants, des stabilisants et des agents de nucléation.

2. Matières à mouler selon revendication 1, caractérisées en ce qu'elles contiennent :
A) 10 à 43 % en poids de polyamide,
B) 8 à 25 % en poids d'additifs,
C) 45 à 60 % en poids de carbonate hydraté de Ca-Mg et
D) 0 à 25 % en poids de matières renforçantes.

3. Matières à mouler selon revendication 1, caractérisées en ce que l'on utilise en tant que polyamides thermoplastiques A) du PA6, du PA 66, du PA 46, du PA 610, du PA 6/6T ou un copolyamide partiellement cristallin consistant en les mêmes composants, isolément ou en mélanges entre eux.

4. Matières à mouler selon revendication 1, caractérisées en ce que l'on utilise en tant qu'additif B) abaissant la température de façonnage du polyamide
a) en proportions de 8 à 25 % en poids, un copolyamide de l'acide isophtalique et/ou de l'acide téréphtalique-hexaméthylènediamine/ caprolactame et/ou
b) en proportions de 1 à 9% en poids, des composés polyhydroxylés du type des novolaques à un degré de polymérisation de 3 à 20, sous réserve que la somme de a) + b) ne dépasse pas 30 % en poids.

5. Matières à mouler selon les revendications 1 à 4, caractérisées en ce que l'on utilise en tant que matières renforçantes D) des fibres de verre, des fibres de carbone, des fibres minérales ou leurs mélanges.

6. Matières à mouler selon les revendications 1 à 5, caractérisées en ce que l'on utilise en tant qu'additif ignifugeant du carbonate hydraté de calcium-magnésium ayant subi un traitement de surface améliorant l'adhérence et à un diamètre de particule moyen de 0,4 à 10 µm.

7. Utilisation des matières à mouler selon les revendications 1 à 6 pour la fabrication de pièces moulées.

8. Pièces moulées fabriquées à partir des matières à mouler selon les revendications 1 à 6.
